# Europäisches Patentamt

## European Patent Office

## Office européen des brevets

(11) Veröffentlichungsnummer: **0 100 834**
**B1**

(12) **EUROPÄISCHE PATENTSCHRIFT**

(45) Veröffentlichungstag der Patentschrift:
**27.11.85**

(21) Anmeldenummer: **83105688.2**

(22) Anmeldetag: **10.06.83**

(51) Int. Cl.⁴: **C 09 D 11/16**

(30) Priorität: **16.08.82 DE 3230463**

(43) Veröffentlichungstag der Anmeldung:
**22.02.84 Patentblatt 84/8**

(45) Bekanntmachung des Hinweises auf die Patenterteilung:
**27.11.85 Patentblatt 85/48**

(84) Benannte Vertragsstaaten:
**AT BE CH DE FR GB IT LI LU NL SE**

(56) Entgegenhaltungen:
**DE - A - 2 914 913**
**DE - A - 3 041 769**
**US - A - 4 256 494**

**Die Akte enthält technische Angaben, die nach dem Eingang der Anmeldung eingereicht wurden und die nicht in dieser Patentschrift enthalten sind.**

(73) Patentinhaber: **Pelikan Aktiengesellschaft, Podbielskistrasse 141 Postfach 103, D-3000 Hannover 1 (DE)**

(72) Erfinder: **Bohne, Karl-Heinz, Isenkamp 1a, D-3004 Isernhagen 2 (DE)**
Erfinder: **Rahn, Hans-Jürgen, Liliencronstrasse 8, D-3000 Hannover 1 (DE)**

(74) Vertreter: **Pretzell, Hellmut, Dipl.-Ing., Pelikan AG Podbielskistrasse 141 Postfach 103, D-3000 Hannover 1 (DE)**

(54) Mechanisch radierbare Schreibflüssigkeit.

## Beschreibung

Die Erfindung betrifft eine mechanisch radierbare Schreibflüssigkeit in Form einer wässerigen Bindemitteldispersion auf Latex-Basis, die ein Farbmittel und gegebenenfalls weitere Zusatzstoffe enthält.

Es ist oft wünschenswert, dass Schriftbilder aus Schreibflüssigkeiten auf einer Schreibunterlage entfernt oder korrigiert werden sollen, andererseits dringen Schreibflüssigkeiten insbesondere in nicht oberflächengeschlossene Träger mit ihren Farbbestandteilen sehr schnell ein und sind dann auf mechanischem Wege nur noch sehr schwer oder kaum entfernbar, soll der Träger nicht beschädigt werden.

Mechanisch radierbar kann man Schreibflüssigkeiten machen, indem man die verwendeten Lösungsmittel mit einem Störfaktor versetzt, der die mechanische Entfernung, beispielsweise eines Strichs, aus einer solchen Schreibflüssigkeit erleichtert. Die Verwendung von Lösungsmitteln ist indessen aus mancherlei Gründen nicht wünschenswert.

Es ist daher auch bekannt, Schreibflüssigkeiten dieser Art auf wässeriger Basis herzustellen.

Aus der DE-A1 Nr. 2914913 ist eine solche Schreibflüssigkeit auf wässeriger Basis bekannt, bei der eine wässerige Latexdispersion mit einer Pigmentfeinteigpräparation vermischt wird. Sie enthält weitere Zusätze, wie Konservierungsmittel. Eine solche Schreibflüssigkeit ist jedoch nicht für die Verwendung in Kapillarschreibgeräten geeignet, da sie auf Grund des Feststoffgehaltes in Form der unlöslichen Pigmente nicht fliessfähig genug ist.

Aus der DE-A1 Nr. 3041769 ist eine auslöschbare Schreibflüssigkeit bekannt, die eine Latexemulsion eines carboxylierten Styrol/Butadien-Copolymerisates bestimmter Viskosität und Oberflächenspannung im Wasser verwendet. Darin ist ein wasserlöslicher Triarylmethanfarbstoff enthalten. Derartige Schreibflüssigkeiten sind äusserst lichtunbeständig und verblassen nach kurzer Zeit, so dass sich ihre Verwendung als Schreibflüssigkeit nicht empfiehlt.

Die Erfindung hat sich daher die Aufgabe gestellt, eine mechanisch radierbare Schreibflüssigkeit vorzuschlagen, die in Kapillarschreibgeräten verwendbar ist, eine dauerhafte Schrift liefert und sich darüber hinaus sehr leicht von der Oberfläche des Schriftträgers entfernen lässt, so mit einem mechanischen Mittel, wie einem Radiergummi.

Diese Aufgabe wird erfindungsgemäss dadurch gelöst, dass die Schreibflüssigkeit einen wasserunlöslichen Farbstoff enthält.

Die wässerige Bindemitteldispersion, die in der erfindungsgemässen Schreibflüssigkeit enthalten ist, ist vorzugsweise eine wässerige Polymer-Dispersion von Styrol-Butadien, nicht carboxyliert, oder von 2-Chlorbutadien oder von Vinylpyridin-Styrol-Butadien.

Bei den wasserunlöslichen und/oder lösungsmittellöslichen Farbstoffen handelt es sich um Farbstoffe aus der Gruppe der Anthrachinon-

Farbstoffe und vorzugsweise dabei um Ceresblau-R ® oder um Waxoline blue APFW ® (CI Nr. 61500 bzw. 61551) sowie um Farbstoffe aus der Gruppe der Triarylmethan-Farbstoffe, vorzugsweise um den blauen Farbstoff vom CI Nr. 42770:1.

Die erfindungsgemässen Schreibflüssigkeiten ergeben auf Grund der wässerigen Bindemitteldispersion auf Latexbasis eine auf der Oberfläche angeordnete Schrift, wobei der wasserunlösliche Farbstoff in dieser Latexschicht auf der Oberfläche enthalten ist und daher z. B. mit einem Radiergummi sehr leicht wieder von der Oberfläche entfernt werden kann, ohne dass diese beschädigt wird. Ein Überschreiben mit der gleichen Schreibflüssigkeit ist sofort wieder möglich.

Die Schreibflüssigkeit trocknet wasserunlöslich auf, sobald das Wasser der Dispersion verdunstet ist. Die im ursprünglichen Zustand radierbare Schrift ist nach entsprechendem Alterungsablauf nicht mehr korrigierbar. Obwohl die oben angegebenen Farbstoffe nicht wasserlöslich sind und ein Lösungsmittel nicht zugegeben ist, scheint die Wirkung darauf zu beruhen, dass die Bindemittelteilchen den Farbstoff aufnehmen oder lösen bzw. der Farbstoff die Kunststoffteilchen des Bindemittels einfärbt.

In Verfolg des Erfindungsgedankens kann die intensive Einfärbung der Polymerteilchen des Bindemittels sichtbar verstärkt werden durch die Verwendung von Verbindungen, die offensichtlich in der Art eines Farbüberträgers oder eines Lösungsvermittlers wirken. Solche Verbindungen sind Harnstoffe, Säureamide und Sulfoxide. Es hat sich gezeigt, dass von den Harnstoffen bevorzugt geeignet sind N-Methylharnstoff, Thioharnstoff und 2-Hydroxy-ethylharnstoff. Von den Säureamiden eignen sich vorzugsweise Formamid und Acetamid. Von den Sulfoxiden eignet sich sehr gut Dimethylsulfoxid.

Eine weitere Intensivierung der Einfärbung des Bindemittels erreicht man durch die Zugabe kleiner Mengen von Weichmachern aus der Gruppe der Phthalsäureester und der Zitronensäureester. Genannt werden sollen Diisobutylphthalat und für die Zitronensäureesterklasse Acetyltributylcitrat.

Wichtig für eine Schreibflüssigkeit ist eine gewisse Offenzeit, d. h., die Schreibflüssigkeit darf nicht zu schnell in den Schreibkapillaren eintrocknen, wenn der Schreibvorgang durch Weglegen des Schreibgerätes oder auch durch Halten in der Hand für eine bestimmte Zeitspanne unterbrochen ist. Die Offenzeit und die damit verbundene Wiederanschreibbarkeit lässt sich bei der erfindungsgemässen Schreibflüssigkeit dem Standard des Schreibgerätetyps entsprechend durch Verwendung eines Feuchthaltemittels einstellen.

Als Feuchthaltemittel für die erfindungsgemässe Schreibflüssigkeit sind bevorzugt einsetzbar Glycerin, 1,2,4-Butantriol und ein Gemisch aus Glycerin und Karion.

Bei der erfindungsgemässen Schreibflüssigkeit lässt sich eine gute Anpassung der Oberflächenspannung und damit des Fliessverhaltens erreichen, wenn man geringe Mengen eines oberflächenaktiven Mittels vom Typ der Fettsäureethoxylate, vorzugsweise Polyglykol-400-Monolaurat, oder/und Acylsarkosinate, bevorzugt Na-N-Lauroylsarkonisat, zusetzt. Diese oberflächenaktiven Mittel ergeben ausserdem eine Stabilisierung des Schreibflüssigkeitssystems, ohne dass dadurch die Radierfähigkeit leidet. Vorteilhaft kann es sein, wenn der Schreibflüssigkeit 1-2% einer Pigmentfeinteigpräparation, beispielsweise die nach der DE-A1 Nr. 2914913 zugesetzt wird. Dadurch erreicht man eine erhebliche Steigerung der Lichtechtheitsstufe. Zur Herstellung der Schreibflüssigkeit verfährt man etwa wie folgt:

Zunächst wird eine wässerige Polymer-Dispersion auf Latexbasis, beispielsweise Styrol-Butadien oder 2-Chlorbutadien oder Vinylpyridin-Styrol-Butadien, vorzugsweise jedoch ein Gemisch dieser 3 Typen vorgelegt.

In diese Dispersion werden die Farbstoffe aus der Gruppe der Anthrachinon- oder/und der Triarylmethan-Farbstoffe in einer Menge und mit einer solchen Intensität eingemischt, dass die gewünschte Farbintensität entsteht. Zusammen mit dem Farbstoff oder bereits in der wässerigen Dispersion des Bindemittels enthalten, gibt man die oben genannten Farbüberträger zu, ebenso die Weichmacher, wodurch der Übergang des Farbstoffes in die Polymerteilchen des Bindemittelsystems gefördert wird. Die anderen Zusätze können dann nachfolgend untergemischt werden.

Die Einstellung der Viskosität und Fliessfähigkeit usw. erfolgt durch die Zugabe von Wasser bzw. durch Einstellung der einzelnen Bestandteile der Schreibflüssigkeit zueinander bzw. des Bindemittelsystems.

Der Farbstoff wird als solcher trocken und in möglichst fein zerteilter Form eingemischt.

Ein Beispiel einer erfindungsgemässen Schreibflüssigkeit wird zur Veranschaulichung nachfolgend aufgeführt:

| Wässerige Bindemittel-dispersion (25%) | 50-90 Gew.-% |
| Farbstoff | 2-4 Gew.-% |
| Lösungsvermittler | 5-12 Gew.-% |
| Weichmacher | 2-5 Gew.-% |
| Feuchthaltemittel | 10-20 Gew.-% |
| Netzmittel | 0,1-2,0 Gew.-% |
| Pigmentfeinteigpräparation | 1-2 Gew.-% |

## Patentansprüche

1. Mechanisch radierbare Schreibflüssigkeit in Form einer wässerigen Bindemitteldispersion auf Latexbasis, die ein Farbmittel und gegebenenfalls weitere Zusatzstoffe enthält, dadurch gekennzeichnet, dass sie einen wasserunlöslichen Farbstoff enthält.

2. Schreibflüssigkeit nach Anspruch 1, dadurch gekennzeichnet, dass das Bindemittel der Dispersion ein (nicht carboxyliertes) Styrol-Butadien-, 2-Chlor-Butadien- und/oder Vinylpyridin-Styrol-Butadien-Polymerisat ist.

3. Schreibflüssigkeit nach Anspruch 1 oder 2, dadurch gekennzeichnet, dass der wasserunlösliche Farbstoff ein wasserunlöslicher Anthrachinon- und/oder Triarylmethan-Farbstoff ist.

4. Schreibflüssigkeit nach einem der Ansprüche 1 bis 3, dadurch gekennzeichnet, dass der Anthrachinon-Farbstoff in Form der blauen Farbstoffe der CI 61500 und 61551 (einzeln oder gemischt) und der Triarylmethan-Farbstoff in Form des blauen Farbstoffs mit dem CI 42770:1 vorliegt.

5. Schreibflüssigkeit nach einem der Ansprüche 1 bis 4, dadurch gekennzeichnet, dass sie zusätzliche Harnstoffe, Säureamide oder Sulfoxide enthält.

6. Schreibflüssigkeit nach Anspruch 5, dadurch gekennzeichnet, dass sie einen Harnstoff in Form von N-Methylharnstoff, Thioharnstoff oder 2-Hydroxyethylharnstoff, ein Säureamid in Form von Formamid oder Acetamid oder ein Sulfoxid in Form von Dimethylsulfoxid enthält.

7. Schreibflüssigkeit nach einem der Ansprüche 1 bis 6, dadurch gekennzeichnet, dass sie zusätzlich eine geringe Menge eines Weichmachers in Form eines Phthalsäureesters und/oder eines Zitronesäureesters enthält.

8. Schreibflüssigkeit nach Anspruch 7, dadurch gekennzeichnet, dass sie als Ester Diisobutylphthalat oder Acetyltributylcitrat enthält.

9. Schreibflüssigkeit nach einem der Ansprüche 1 bis 8, dadurch gekennzeichnet, dass sie zusätzlich ein Feuchthaltemittel in Form von Glycerin, 1,2,4-Butantriol oder eines Gemisches aus Glycerin und Karion enthält.

10. Schreibflüssigkeit nach einem der Ansprüche 1 bis 9, dadurch gekennzeichnet, dass sie eine geringe Menge eines oberflächenaktiven Mittels vom Typ der Fettsäureethoxylatè enthält.

## Revendications

1. Liquide d'écriture effaçable mécaniquement sous la forme d'une dispersion aqueuse d'un liant à base de latex contenant un pigment de couleur et le cas échéant d'autres additifs, caractérisé en ce qu'il contient un colorant non soluble dans l'eau.

2. Liquide d'écriture selon la revendication 1, caractérisé en ce que le liant de la dispersion est un produit de polymérisation du type styrène-butadiène (non carboxylé), 2-chloro-butadiène, et/ou vinylpyridine-styrène-butadiène.

3. Liquide d'écriture selon l'une des revendications 1 ou 2, caractérisé en ce que le colorant non soluble dans l'eau est de l'anthraquinone et/ou du triarylméthane non soluble dans l'eau.

4. Liquide d'écriture selon l'une des revendications 1 à 3, caractérisé en ce que le colorant à base d'anthraquinone est sous la forme d'un colorant bleu de CI 61500 et 61551 (séparément ou en mélange) et en ce que le colorant à base de triarylméthane est sous la forme du colorant bleu avec CI 42700:1.

5. Liquide d'écriture selon l'une des revendications 1 à 4, caractérisé en ce qu'il contient en outre des produits à base d'urée, d'amide d'acide ou de sulfoxyde.

6. Liquide d'écriture selon la revendication 5, caractérisé en ce qu'il contient une urée sous la forme de N-méthyl-urée, thio-urée ou 2-hydroxyéthyl-urée, un amide d'acide sous la forme de formamide ou d'acétamide ou un sulfoxide sous la forme de diméthylsulfoxide.

7. Liquide d'écriture selon l'une des revendications 1 à 6, caractérisé en ce qu'il contient en outre une faible quantité d'un adoucisseur sous la forme d'un ester d'acide phthalique et/ou d'un ester d'acide citrique.

8. Liquide d'écriture selon la revendication 7, caractérisé en ce qu'il contient comme ester du di-isobutyl-phtalate ou de l'acétyltributylcitrate.

9. Liquide d'écriture selon l'une des revendications 1 à 8, caractérisé en ce qu'il contient en outre un agent de conservation d'humidité sous la forme de glycérine, de 1,2,4-butane-triol ou d'un mélange de glycérine et de karion.

10. Liquide d'écriture selon l'une des revendications 1 à 9, caractérisé en ce qu'il contient une faible quantité d'un agent tensio-actif du type des éthoxylates d'acides gras.

## Claims

1. A mechanically erasable writing/recording liquid comprising a latex-based aqueous dispersion of a bonding agent and including a colouring agent and, possibly, further fillers, characterised in that the liquid contains a dye which is insoluble in water.

2. A writing/recording liquid according to Claim 1, characterised in that the bonding agent of the dispersion is a polymer of (un-carboxylated) styrene-butadiene, of 2-chloro-butadiene and/or of vinylpyridine-styrene-butadiene.

3. A writing/recording liquid according to Claim 1 or Claim 2, characterised in that the water-insoluble dye is a water-insoluble anthraquinone and/or a triarylmethane compound.

4. A writing/recording liquid according to any one of Claims 1 to 3, characterised in that the anthaquinone dye is used in the form of blue dyes of CI 61500 and 61551 (singly or mixed) and the triarylmethane dye is in the form of blue dye of CI 42770:1.

5. A writing/recording liquid according to any one of Claims 1 to 4, characterised in that it additionally contains urea, acid-amide or a sulphoxide.

6. A writing/recording liquid according to Claim 5, characterised in that the urea is N-methyl urea, thiourea or 2-hydroxy-ethyl urea, the acid amide is formamide or acetamide and the sulphoxide is dimethyl sulphoxide.

7. A writing/recording liquid according to any one of Claims 1 to 6, characterised in that it additionally contains a small quantity of a plasticizer such as a phthalic acid ester and/or a citric acid ester.

8. A writing/recording liquid according to Claim 7, characterised in that the ester comprises diisobutylphthalate ester or acetyl-tributyl citrate ester.

9. A writing/recording liquid according to any one of Claims 1 to 8, characterised in that it additionally contains a moisture-preserving agent comprising glycerine, 1,2,4-butantriol or a mixture of glycerine and karion.

10. A writing/recording liquid according to any one of Claims 1 to 9, characterised in that it contains a small quantity of a surface-active agent of the fatty acid ethoxylate type.